Europäisches Patentamt

European Patent Office

Office européen des brevets

(19)

(11) Publication number: **0 019 994**
**B1**

(12) **EUROPEAN PATENT SPECIFICATION**

(45) Date of publication of patent specification: **25.05.83**

(21) Application number: **80301012.3**

(22) Date of filing: **01.04.80**

(51) Int. Cl.³: **B 21 C 23/12,**
**F 16 D 69/00, B 29 F 3/04**

(54) **Method of manufacture of annular friction facings.**

(30) Priority: **10.04.79 GB 7912539**

(43) Date of publication of application:
**10.12.80 Bulletin 80/25**

(45) Publication of the grant of the patent:
**25.05.83 Bulletin 83/21**

(84) Designated Contracting States:
**DE FR NL**

(56) References cited:
**DE - A - 2 611 200**
**DE - A - 2 650 496**
**US - A - 1 918 127**
**US - A - 2 599 826**

(73) Proprietor: **AUTOMOTIVE PRODUCTS PUBLIC**
**LIMITED COMPANY**
**Tachbrook Road**
**Leamington Spa Warwickshire CV31 3ER (GB)**

(72) Inventor: **McCombie, Ernest Hughes**
**29 Rogers Lane**
**Ettington Warwickshire (GB)**

Courier Press, Leamington Spa, England.

Method of manufacture of annular friction facings

This invention relates to a method of manufacture of annular friction facings, particularly but not exclusively, for use in automobile friction clutches or brakes.

It is known to manufacture friction facings by passing the friction material through an extruder so that a dough of 'green' friction material (by 'green' is meant uncured) emerges out of the extruder die as a flat ribbon whose width is substantially equal to the radial width of the friction facing and then winding the ribbon into a rough preformed annulus of green material, which is then moulded and cured. Such a process is shown in US—A—2,599,826 (Halstead et al).

A major disadvantage of winding a broad flat ribbon into an annulus in which the width of the ribbon forms the radial width of the annulus is that the radially inner edge of the ribbon tends to crimp and the outer edge becomes strained and may shear in several places. These interruptions in the outer periphery of the green friction material annulus cause dislocations and a discontinuity in the reinforcing asbestos fibre array that is distributed through the emergent frictional material dough, so that after the preformed annulus has been moulded and cured these dislocations are a potential weakness in the structure of the moulded friction facing. US—A—1 918 127 also discloses conventional extrusion techniques which are used to extrude friction material into a rotating die. West German patent specification DE—A1—26 11 200 and DE—A1—26 50 496 both disclose the extrusion of curved pipe.

The present invention provides a method of extruding a planar solid annular friction facing in which the extrudate is caused to curve within the die, and thereby avoid the above-mentioned problem.

Accordingly there is provided a method of manufacture of an annular friction facing for friction clutches or brakes and including the step of making an annular preform of uncured friction material by extruding a dough of uncured friction material through a die to form a ribbon whose width is substantially equal to the radial width of the facing to be formed wherein the friction material is caused to emerge from the extruder die with a greater linear velocity on one side of the ribbon than on the other side, so as to set up a velocity gradient across the ribbon which causes the ribbon to assume a helical form of fine pitch with convolutions each of an outer diameter substantially equal to the diameter of the required facing whereby convolutions can be parted from the helix and flattened to produce annular preforms.

Preferably the friction material is caused to flow through a die which has a continually changing cross-sectional area of flow in the region of the mouth of the die said changing cross-sectional area causing the velocity gradient across the ribbon.

The invention will be described by way of example and with reference to the accompanying drawings in which:—

Fig. 1 is a diagrammatic view of a method according to this invention;

Fig. 2 shows a vertical section through the apparatus used in Fig. 1; and

Fig. 3 is a horizontal section through the apparatus shown in Fig. 1.

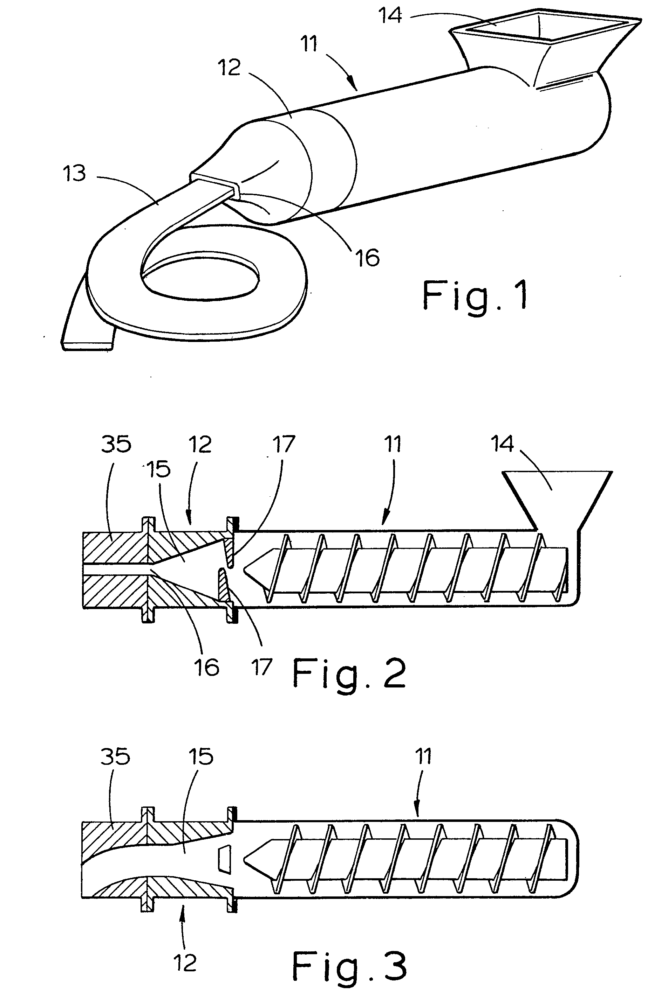

Fig. 1 shows a step in a method of manufacture of an annular friction facing for a clutch or brake in which friction material is placed into a hopper 14 of a screw-type extruder 11. The friction material can be in any convenient form eg. powder or granules and it is passed along the extruder in which it is mixed and plasticised so that it is in the form of a plastic dough as it approaches the die 12. The extrudate 13 in the form of a flat ribbon of friction material dough emerges from the extruder die with a greater velocity on one side of the ribbon than the other side hence setting up a velocity gradient across the ribbon which causes the ribbon to assume a helical form of very fine pitch between adjacent convolutions of the helix. The outer diameter of each of the convolutions of the helix is substantially equal to the outer diameter of the required friction facing. The convolutions of the helical extrudate are then parted from the helix and flattened to produce annular preforms of 'green' friction material. Each annular preform can comprise one flattened convolution or alternatively two convolutions nestled together may be superposed one on the other to form the preform.

The width of the ribbon 13 extruded from the die 12 is substantially equal to the radial width of the annular facing to be formed, and when the ends of a single turn of the coil are abutted together the preform has substantially the same dimensions as the finished facing. Alternatively with two or more coils a "split-ring" type of construction is formed.

The preformed annulus of friction material is then moulded and cured into the finished facing which is ground down to its final dimensions.

Fig. 2 and Fig. 3 show sections through the apparatus used in Fig. 1, plus the provision of a sizing die 35 placed onto the mouth of the die 12.

The die 12 has a bore 15 shaped so that the flow path there through, has a continuously changing cross-sectional area of flow from when the dough enters the bore 15 until it exits the mouth 16 of the die. The flow path is shaped so that the changing and decreasing cross-sectional area of flow towards the mouth 16 causes a velocity gradient across the extrudate 13 as it emerges from the mouth 16 of the die.

In order to obtain maximum effect for forming a helix on emergence from the die 12 it is necessary to slow down the flow rate of the extrudate prior to it entering the area of changing cross-section. This is achieved by placing barriers 17 in the flow path such that the extrudate material must first pass through the barriers 17 before it enters said area.

The degree of obstruction to flow caused by the barriers 17 will depend upon the curvature and radius of the required helical convolution. For each convolution size, an optimum degree of obstruction will have to be derived.

When the extrudate 13 exits the mouth 16 of the die it will expand slightly, as is well known during extrusion processes.

In order to obtain a uniform extrudate of exceptable tolerances in dimensional size it may be necessary to pass the extrudate 13 through a sizing die 35 which has the required arcuate shape and dimensions as the annular friction facing which is being manufactured.

## Claims

1. A method of manufacture of planar annular friction facings for friction clutches or brakes and including the step of making an annular preform of uncured friction material by extruding a dough of uncured friction material through a die to form a ribbon (13) whose width is substantially equal to the radial width of the facing to be formed, characterised in that the friction material is caused to emerge from the extruder die (16) with a greater linear velocity on one side of the ribbon (13) than on the other side, so as to set up a velocity gradient across the ribbon which causes the ribbon to assume a helical form of fine pitch with convolutions each of an outer diameter substantially equal to the outer diameter of the required facing whereby convolutions can be parted from the helix and flattened to produce annular preforms.

2. A method as claimed in Claim 1, characterised in that convolutions of the extruded helix are superimposed to form a facing.

3. A method as claimed in Claim 2, characterised in that the preform is made from two convolutions, one superimposed on the other.

4. A method as claimed in any preceding claim, characterised in that the friction material is caused to flow through a die (12) having a bore (15) of varying cross-sectional area of flow, said cross-sectional area causing the required change in velocity across the ribbon (13) of extruded material.

5. A method as claimed in Claim 4, characterised in that the friction material immediately after its emergence from the die mouth (16) is caused to pass through an arcuate sizing die (35) of the same cross-sectional dimensions and radius as the required facings.

6. A method as claimed in Claim 4 and Claim 5, characterised in that as the friction material enters the die (12) its flow rate is caused to slow by obstructions (17) placed in the flow path, so that its flow rate is reduced prior to the cross-sectional area of flow being varied.

## Revendications

1. Procédé de fabrication de garnitures de friction annulaires pour des freins ou embrayages à friction, qui comporte l'étape qui consiste à former une préforme annulaire de matière de friction non durcie en extrudant une pâte de matière de friction non durcie à travers une filière pour former un ruban (13) dont la largeur est sensiblement égale à la largeur radiale de la garniture qui doit être formée, caractérisé en ce que la matière de friction est contrainte de sortir de la filière (16) de l'extrudeuse avec une vitesse linéaire plus grande d'un côté du ruban (13) que de l'autre côté, de façon à établir un gradient de vitesse en travers du ruban, qui a pour effet que le ruban prend une forme hélicoïdale à petit pas, dont chacune des spires a un diamètre extérieur sensiblement égal au diamètre extérieur de la garniture requise, de sorte que les spires peuvent être séparées de l'hélice et aplaties pour former des préformes annulaires.

2. Procédé selon la revendication 1, caractérisé en ce que des spires de l'hélice extrudée sont superposées pour former une garniture.

3. Procédé tel que revendiqué dans la revendication 2, caractérisé en ce que la préforme est formée de deux spires, une superposée à l'autre.

4. Procédé selon l'une quelconque des revendications précédentes, caractérisé en ce que la matière de friction est contrainte de s'écouler à travers une filière (12) ayant un alésage (15) dont la surface de section transversale d'écoulement change continuellement dans la région de l'ouverture de la filière, ladite surface de section transversale provoquant le changement de vitesse requis en travers du ruban (13) de matière extrudée.

5. Procédé tel que revendiqué dans la revendication 4, caractérisé en ce que la matière de friction, immédiatement après sa sortie de l'ouverture (16) de la filière, est contrainte de passer dans une filière de calibrage arquée (35) ayant les mêmes dimensions de section transversale et le même rayon que les garnitures requises.

6. Procédé selon la revendication 4 et la revendication 5, caractérisé en ce que, lorsque la matière de friction entre dans la filière (12), un ralentissement de sont débit est provoqué par des obstructions (17) placées dans le trajet d'écoulement, de sorte que son débit est réduit avant que la surface de la section transversale d'écoulement soit changée.

## Patentansprüche

1. Verfahren zur Herstellung von ebenen, ringförmigen Reibbelägen für Reibungskupplungen oder Bremsen mit dem Schritt des Herstellens eines ringförmigen Vorformlings aus ungehärtetem Reibmaterial durch Extrudieren einer Formmasse aus ungehärtetem Reibmaterial durch eine Düse, um ein Band (13) zu formen, dessen Breite im wesentlichen gleich der radialen Breite des zu formenden Belages ist, dadurch gekennzeichnet, daß das Reibmaterial mit einer größeren Lineargeschwindigkeit auf einer Seite des Bandes (13) als auf der anderen Seite aus der Extruderdüse (16) austritt, so daß ein Geschwindigkeitsgradient über das Band entsteht, durch den das Band eine Schraubenform mit kleiner Steigung mit Windungen erhält, von denen jede einen im wesentlichen gleichen Außendurchmesser wie der gewünschte Belag hat, wodurch Windungen von der Schraube getrennt und plattgemacht werden können, um ringförmige Vorformlinge herzustellen.

2. Verfahren nach Anspruch 1, dadurch gekennzeichnet, daß Windungen der extrudierten Schraube übereinander gelegt werden, um einen Belag zu bilden.

3. Verfahren nach Anspruch 2, dadurch gekennzeichnet, daß der Vorformling aus zwei Windungen hergestellt wird, von denen die eine über der anderen liegt.

4. Verfahren nach einem vorausgehenden Anspruch, dadurch gekennzeichnet, daß das Reibmaterial durch eine Düse (12) strömt, die eine Bohrung (15) mit sich ändernder Strömungsquerschnittsfläche hat, wobei diese Querschnittsfläche die erforderliche Geschwindigkeitsänderung über das Band (13) des extrudierten Materials bewirkt.

5. Verfahren nach Anspruch 4, dadurch gekennzeichnet, daß das Reibmaterial unmittelbar nach seinem Austritt aus der Düsenmündung (16) durch eine bogenförmige Kalibrierdüse (35) mit den gleichen Querschnittsabmessungen und dem gleichen Radius wie die gewünschten Beläge geht.

6. Verfahren nach Anspruch 4, und Anspruch 5, dadurch gekennzeichnet, daß seine Strömungsgeschwindigkeit durch in Strömungsweg angeordnete Hindernisse (16) verlangsamt wird, wenn das Reibmaterial in die Düse (12) eintritt, so daß seine Strömungsgeschwindigkeit verringert wird, bevor die Strömungsquerschnittsfläche geändert wird.

0 019 994

Fig. 1

Fig. 2

Fig. 3